# EUROPEAN PATENT APPLICATION

(11) **EP 1 566 611 A1**
(43) Date of publication of application: **24.08.2005**
(21) Application number: 05003410.7
(22) Date of filing: 17.02.2005
(51) Int. Cl.: G01C 21/34, G08G 1/0968

(54) **Method and apparatus for searching a route**

(30) Priority: 20.02.2004 JP 2004044446
(71) Applicant: AISIN AW CO., LTD., Aichi 444-1192 (JP)
(72) Inventor: Yoshikawa, Kazutaka, c/o Aisin AW Co., Ltd., Okazaki-shi Aichi 444-8564 (JP); Minami, Toshiaki, c/o Aisin AW Co., Ltd., Okazaki-shi Aichi 444-8564 (JP); Nagase, Kenji, c/o Aisin AW Co., Ltd., Okazaki-shi Aichi 444-8564 (JP); Tomita, Hiroshi, c/o Aisin AW Co., Ltd., Okazaki-shi Aichi 444-8564 (JP)
(74) Representative: TBK-Patent

(57) **Abstract**

Method and apparatus for searching for a navigation route search a tentative route from a start point to a destination, based on hierarchical map data. The methods and apparatus search for a start-area route from the start point to a point on the tentative route at which wide-area map data is connected to local-area map data, based on the local-area map data and traffic information and search for a destination-area route to the destination from a point on the tentative route at which the wide-area map data is connected to the local-area map data, based on the local-area map data and the traffic information. The methods and apparatus determine a navigation route from the start point to the destination, based on the start-area route, the tentative route, and the destination-area route.

## Description

The disclosure of Japanese Patent Application No. 2004-044446 filed February 20, 2004 including the specification, drawings, and claims is incorporated herein by reference in its entirety.

Related technical fields generally include methods and apparatus that search for a route.

In a conventional in-vehicle navigation apparatus, such as that disclosed in Japanese Unexamined Patent Application Publication No. 08-287393, a predicted time at which a link will be passed is calculated for all links included in candidate navigation routes. A best route is then selected from the candidate navigation routes taking into account predicted traffic information data indicating a traffic condition that will occur on each link at the predicted time at which the link will be passed.

In the conventional in-vehicle navigation apparatus described above, very complicated calculations based on predicted traffic information data associated with all possible links are performed to determine the best route. A very large amount of complicated computation is necessary.

Thus, various exemplary implementations provide a method and apparatus that searches for a navigation route, without a very large amount of complicated computations in the navigation route searching process.

Various exemplary implementations provide a route search apparatus including a memory that stores hierarchical map data and predicted traffic information, the hierarchical map data comprising at least wide-area map data and local-area map data and a controller. The controller receives current traffic information from outside the route search apparatus and searches a tentative route from a start point to a destination, based on the hierarchical map data. The controller searches for a start-area route from the start point to a point on the tentative route at which the wide-area map data is connected to the local-area map data, based on the local-area map data and the current traffic information and searches for a destination-area route to the destination from a point on the tentative route at which the wide-area map data is connected to the local-area map data, based on the local-area map data and the predicted traffic information. The controller determines a navigation route from the start point to the destination, based on the start-area route, the tentative route, and the destination-area route.

Various exemplary implementations provide a route search apparatus including a memory that stores hierarchical map data and predicted traffic information, the hierarchical map data comprising at least wide-area map data and local-area map data and a controller. The controller searches a tentative route from a start point to a destination, based on the hierarchical map data. The controller searches for a start-area route from the start point to a point on the tentative route at which the wide-area map data is connected to the local-area map data, based on the local-area map data and the predicted traffic information and searches for a destination-area route to the destination from a point on the tentative route at which the wide-area map data is connected to the local-area map data, based on the local-area map data and the predicted traffic information. The controller determines a navigation route from the start point to the destination, based on the start-area route, the tentative route, and the destination-area route.

Various exemplary implementations provide a route search method including searching a tentative route from a start point to a destination, based on hierarchical map data, the hierarchical map data comprising at least wide-area map data and local-area map data. The method includes searching for a start-area route from the start point to a point on the tentative route at which the wide-area map data is connected to the local-area map data, based on the local-area map data and current traffic information and searching for a destination-area route to the destination from a point on the tentative route at which the wide-area map data is connected to the local-area map data, based on the local-area map data and predicted traffic information. The method includes determining a navigation route from the start point to the destination, based on the start-area route, the tentative route, and the destination-area route.

Various exemplary implementations provide a route search method including searching a tentative route from a start point to a destination, based on hierarchical map data, the hierarchical map data comprising at least wide-area map data and local-area map data. The method includes searching for a start-area route from the start point to a point on the tentative route at which the wide-area map data is connected to the local-area map data, based on the local-area map data and predicted traffic information and searching for a destination-area route to the destination from a point on the tentative route at which the wide-area map data is connected to the local-area map data, based on the local-area map data and the predicted traffic information. The method includes determining a navigation route from the start point to the destination, based on the start-area route, the tentative route, and the destination-area route.

Exemplary implementations will now be described with reference to the accompanying drawings, wherein:

Fig. 1 is a schematic block diagram showing an exemplary navigation system;

Fig. 2 shows an exemplary route search method;

Fig. 3 shows an exemplary tentative route search method;

Fig. 4 shows an exemplary method of re-searching for a route in a destination area;

Fig. 5 shows an exemplary route determination method;

Fig. 6 is a diagram showing an exemplary tentative route extending in upper and lower layers via connection nodes;

Fig. 7 is a diagram showing total routes obtained by connecting respective routes in a lower layer in the starting and destination areas found in an elaborate searching process and routes in an upper layer between connection nodes; and

Fig. 8 is a diagram showing a finally determined route extending in the upper and lower layers via connection nodes.

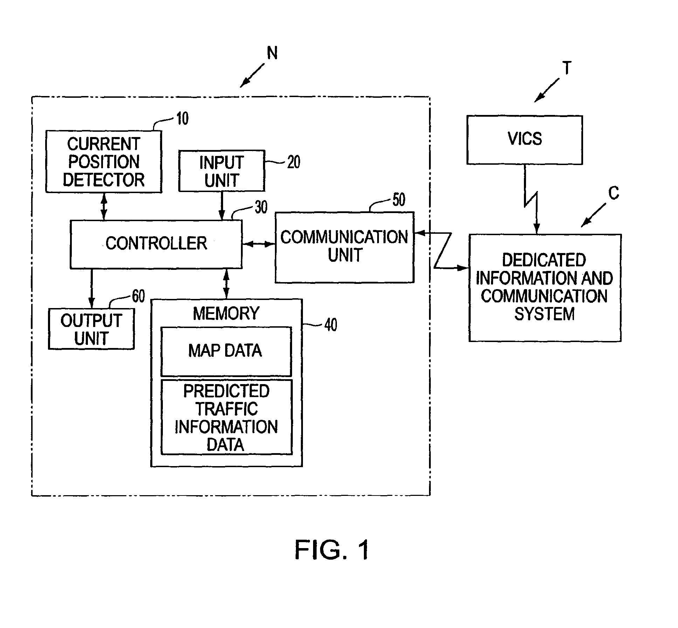

Fig. 1 shows a navigation system N, for example, installed in a vehicle and a dedicated information and communication system C, for example, installed in an information center. Fig. 1 shows a vehicle information and communication system T (hereinafter, also referred to as the VICS®), for example, installed in a vehicle information and communication system center. Note that "VICS" is a registered trademark of the vehicle information and communication system center.

The navigation system N may include, for example, a current position detector 10. The current position detector 10 may be, for example, a GPS receiver that receives radio waves transmitted from satellites of a satellite navigation system (also called a global positioning system (GPS)) and detects a current position of the vehicle and a current time based on the received radio waves.

The navigation system N may also include an input unit 20. The input unit 20 may be, for example, a portable remote controller that is operated to transmit necessary information to a receiver unit (not shown) of, for example, a controller 30 (described later). Instead of the remote controller, for example, a touch panel disposed on a display screen surface of a liquid crystal panel (described later) of an output unit 60 may be used as the input unit 20.

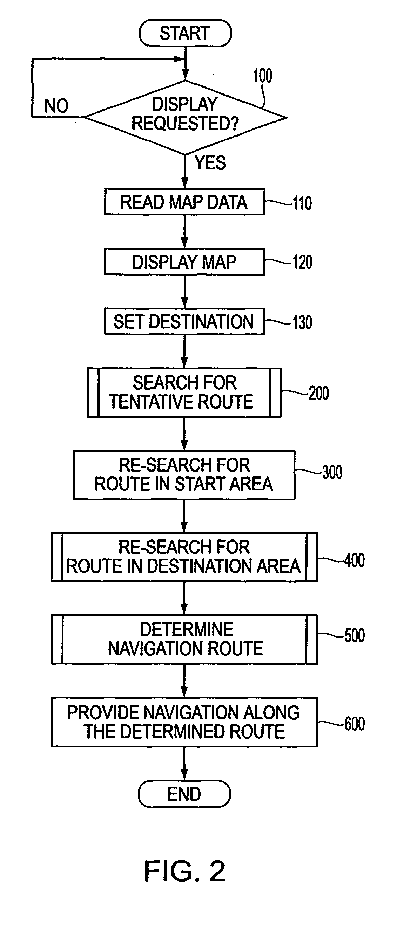

The navigation system N may further include, for example, the controller 30, a memory 40, a communication unit 50, and the output unit 60. The controller 30 may include, for example, a CPU, a RAM and/or a ROM, which may be connected to each other via, for example, a bus line. The controller 30 may execute, for example, using a CPU thereof, a computer program that implements the exemplary methods shown in Figs. 2 to 5.

Specifically, the controller 30 may perform various processes associated with navigation of the vehicle, such as, for example, displaying a map, and/or searching for a navigation route. The controller 30 may provide navigation along a route by, for example, executing a computer program based on a detection signal output from the current position detector 10, an operation signal output from the input unit 20, an output from the memory 40, an output from the communication unit 50, and/or an output from the dedicated information and communication system C.

The receiver unit may not be disposed in the controller 30, but may be disposed outside the controller 30. The computer program described above may be stored in advance in, for example, the ROM of the controller 30.

The memory 40 may be, for example, a hard disk on which predicted traffic information data may be stored in the form of a predicted traffic information database readable by the controller 30. Map data may also be, for example, stored in the memory 40, for example, in the form of a map database readable by the controller 30.

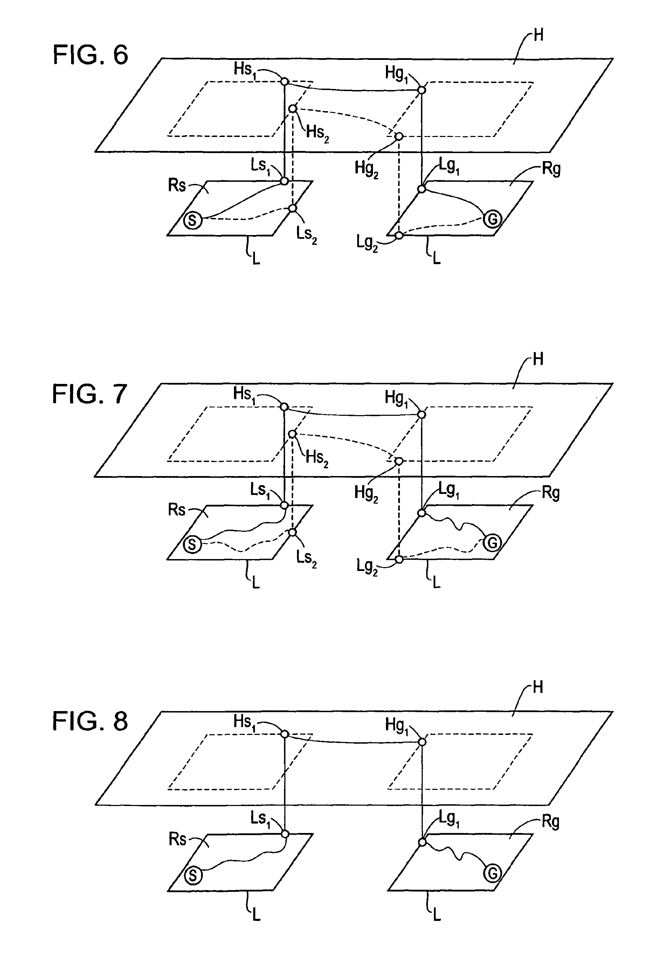

As shown, for example, in Fig. 6, the map data may be described in a hierarchical form consisting of at least an upper layer H and a lower layer L. In the upper layer H, a main road network including a single block of upper-layer wide-area map data may be described. The upper-layer wide-area map data may include, for example, expressways and national roads over an entire country. In the lower layer L, a detailed road network including a plurality of blocks of lower-layer local-area map data corresponding to particular regions may be described. The lower-layer local-area map data may include, for example, prefectural roads, city roads and other roads in addition to the expressways and national roads. As described above, the map data may be described in the hierarchical form such that each block of data in the lower layer represents, for example, the details of a small region, and the block data in the upper layer provides, for example, rough information of a wider region. According to the example shown in Fig. 6 (i.e., having two layers), the upper layer H includes all of the regions in the lower layer L.

The communication unit 50 may receive traffic information data from, for example; the dedicated information and communication system C and may transfer the received traffic information data to the controller 30. Note that the dedicated information and communication system C may receive traffic congestion information from, for example, the VICS® T and may transfer it as the traffic information data to the controller 30.

The output unit 60 may be a display such as, for example, a liquid crystal display that displays information or data needed by the vehicle, for example, under the control of the controller 30. The output unit 60 may be disposed, for example, on an instrument panel on an inner wall of the vehicle.

As described above, the controller 30 may execute the exemplary method shown in Fig. 2, for example, in the form of a computer program or any other form of instructions executable by the controller 30. However, the exemplary methods described herein may operate independent of the disclosed structure and need not be limited to execution by the controller 30 or any other apparatus described herein.

Fig. 2 shows an exemplary route search method. As shown in Fig. 2, in step 100, it is determined whether a map display is requested. A map display may be requested by, for example, a command issued via the input unit 20. If no map display is requested, step 100 may be repeated until a map display is requested.

If a map display is requested, operation continues to step 110. In step 110, map data representing the map specified by the display request (hereinafter, such map data will be referred to simply as specified map data) is read. Such map data may be read, for example, from the memory 40. Specifically, the specified map data may be read from the map database stored in the memory 40. In step 120, the specified map is displayed. The map data may be displayed, for example, on the display panel of the output unit 60 in accordance with the specified map data.

The process proceeds to step 130. In step 130, a destination is set. The destination, i.e., the destination to which the vehicle is to be driven may be, for example, input to the controller 30 via the input unit 20.

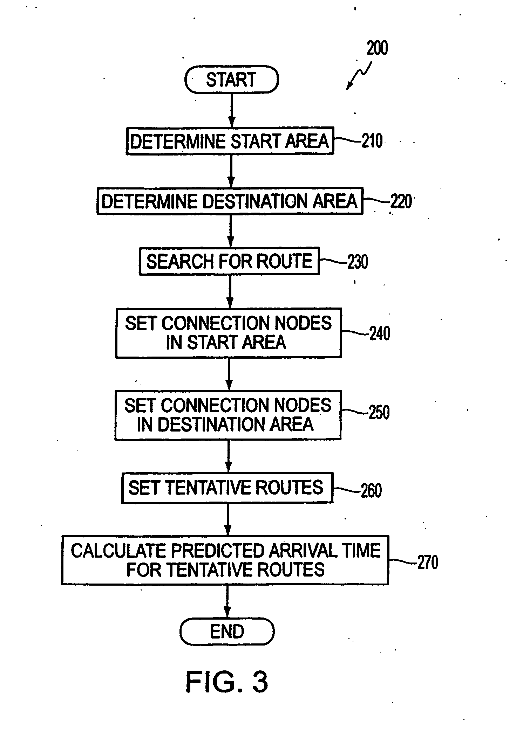

In step 200, a tentative route is searched, for example, by the exemplary tentative route search method shown in Fig. 3. As shown in Fig. 3, in step 210, a start area is determined. The start area may be determined, for example, based on detection data output from the current position detector 10. Specifically, as shown, for example, in Fig. 6, a region Rs in the lower layer L including a current position S detected by the current position detector 10 may be set as the start area.

In step 220, a destination area is determined. The destination area may be determined based on, for example, the destination input in step 130. Specifically, as shown, for example, in Fig. 6, a region Rg in the lower layer L including the destination G input via the input unit 20 may be set as the destination area.

In step 230, a route is searched for. Specifically, as shown, for example, in Fig. 6, a route from the current position S to the destination G may be searched based on the map data in the upper layer H, the start area Rs, and the destination area Rg.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. Points at which links, for example, intersect, terminate, and/or cross a predefined boundary in the map data (such as, for example, the boundaries between the regions of the blocks of lower-layer local-area map data) are referred to as "nodes."

Certain nodes may be included in both the lower-layer local-area map data such as, for example, the start area Rs and the upper-layer wide-area map data such as, for example; the upper layer H. In Fig. 6, nodes included in the start area Rs and having corresponding nodes in the upper layer H are denoted by Lsₙ (n = 1, 2,...), and the corresponding nodes included in the upper layer H are denoted by Hsₙ (n = 1, 2,...).

Similarly, in Fig. 6, nodes included in the destination area Rg and having corresponding nodes in the upper layer H are denoted by Lgₙ (n = 1, 2,...), and the corresponding nodes included in the upper layer H are denoted by Hgₙ (n = 1, 2,...).

Herein, by way of example, assume that two routes are found in the above-described route search in step 230. As shown in Fig. 6, a first route (denoted by a solid line in Fig. 6) starts at the current position S and ends at the destination G via a connection node Ls₁, a connection node Hs₁, a connection node Hg₁, and a connection node Lg₁. A second route (denoted by a dotted line in Fig. 6) starts at the current position S and ends at the destination G via a connection node Ls₂, a connection node Hs₂, a connection node Hg₂, and a connection node Lg₂.

In step 240, connections nodes in the start area are set. Specifically, according to the example shown in Fig. 6, the connection nodes Ls₁ and Ls₂ are set as connection nodes in the start area for the respective routes. In step 250, connection nodes in the destination area are set. Specifically, according to the example shown in Fig. 6, the connection nodes Lg₁ and Lg₂ are set as connection nodes in the destination area for the respective routes. In step 260, one or more tentative routes are selected. According to the example shown in Fig. 6, the two routes described above are selected as tentative routes.

In step 270, a predicted arrival time at which the destination will be reached is calculated for each of the tentative routes. The predicted arrival time at which the destination G will be reached may be calculated for each of the two tentative routes by taking into account, for example, current traffic conditions indicated by traffic information data received by the communication unit 50 and/or by taking into account predicted traffic information data stored in the memory 40. In the calculation of the predicted arrival time, for example; the traffic information data received by the communication unit 50 may be taken into account for a period with a particular length of time after leaving the current position S, and thereafter the predicted traffic information data read from the memory 40 may be taken into account.

The particular length of time may be determined, for example, such that a predicted arrival time at a certain link, based on the current traffic information data received by the communication unit 50, does not significantly differ from a predicted arrival time of that link based on traffic information data as of the arrival time read from the memory 40. For example, the predicted arrival times will not differ as long as the certain link is located within a range reachable within the particular length of time. Thus, the predicted arrival time Tg is obtained for each tentative route selected in step 260. Operation of the exemplary tentative route search method ends. Operation of the exemplary route search method continues to step 300.

In step 300, a route is searched for within the start area. Specifically, a route in the start area Rs, from the current position S to the connection node Ls, is searched for based on, for example, the traffic information data received by the communication unit 50. For example, as shown in Fig. 7, a route from the current position S to the connection node Ls₁ and a route from the current position S to the connection node Ls₂ are re-searched.

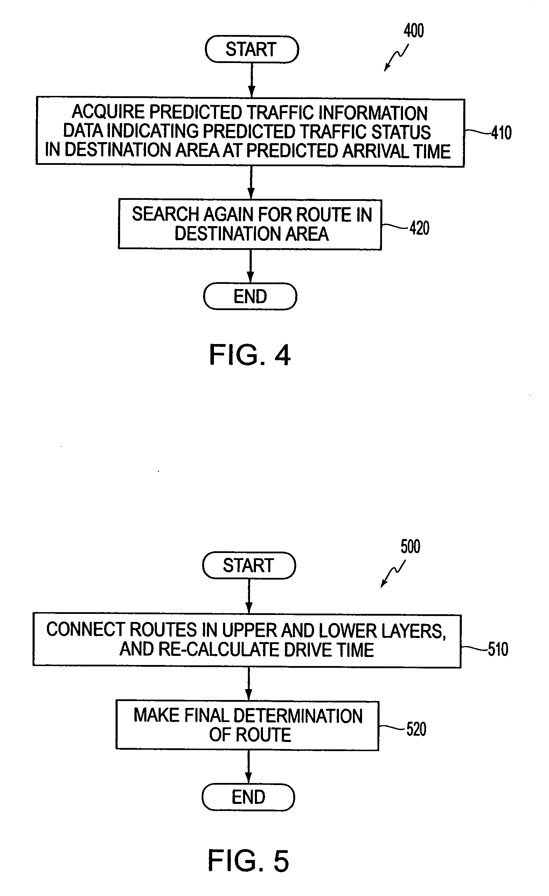

In step 400, a route is searched for within the destination area. The route in the destination area may be searched for by, for example, the exemplary method of researching a route in a destination area shown in Fig. 4. As shown in Fig. 4, in step 410, predicted traffic information data, indicating a predicted traffic condition that will occur in the destination area at the predicted arrival time, is acquired. For example, the predicted traffic information data indicating the predicted traffic condition that will occur in the destination area Rg at the predicted arrival time Tg may be acquired from the memory 40.

In step 420, a route is searched for in the destination area. For example, a route in the destination area Rg, from the connection node Lg to the destination G, is searched based on the predicted traffic information data as of the predicted arrival time Tg acquired in step 270. For example, according to the setting of connection nodes in steps 240 and 250, a route from the connection node Lg1 to the destination G and a route from the connection node Lg2 to the destination G are searched for again, as shown in Fig. 7. The exemplary method of searching again for a route in a destination area ends.

In step 500, a navigation route is determined. The navigation route may be determined, for example, by the exemplary route determination method of Fig. 5. As shown in Fig. 5, in step 510, the time needed to reach the destination along the routes obtained by connecting the route in the upper layer H and the routes in the lower layer L is recalculated. Specifically, according to the examples shown in Figs. 6 and 7, the recalculation is performed to determine the time needed to reach the destination G along the routes obtained by connecting the lower layer L and upper layer H routes, i.e., the route in the upper layer H from the connection node Hs to the connection node Hg selected, for example, in step 230 (Fig. 3), a route in the lower layer L from the current position S to the connection node Ls selected in step 300 (Fig. 2), and a route in the lower layer L from the connection node Lg to the destination G selected in step 420 (Fig. 4).

For example, as shown in Fig. 7, a driving time T₁ is calculated along the route (denoted by a solid line in Fig. 7) obtained by connecting the route from the current position S to the connection node Ls₁, the route from the connection node Hs₁ to the connection node Hg₁, and the route from the connection node Lg₁ to the destination G. In calculating driving time T₁ the current traffic information data may be used for the period with the particular length of time after leaving the current position S, but, after that period, the predicted traffic information data read from the memory 40 may be used. The particular length of time may be determined, for example, such that a predicted arrival time of certain link based on the current traffic information data does not significantly differ from a predicted arrival time of that link based on traffic information data stored in memory 40, as long as the link is located within a range reachable in the period with the particular length of time.

The driving time T₂ is calculated in a similar manner for the route (denoted by a dotted line in Fig. 7) obtained by connecting the route from the current position S to the connection node Ls₂, the route from the connection node Hs₂ to the connection node Hg₂, and the route from the connection node Lg₂ to the destination G.

In step 520, a route to be used for navigation is determined by comparing the calculated driving times. According to the example sown in Fig. 7, the driving times T₁ and T₂ calculated in step 510 are compared, and the route with the shorter driving time is selected as the route for navigation. Accordingly, as shown in Fig. 2, navigation is performed in step 600. Thereby, a driver may drive his/her vehicle to the destination according to navigation along the route determined in step 520.

As described above, the predicted arrival time Tg at which the destination will be reached is calculated for each tentative route. Then, routes (for example, two routes) in the destination area Rg from respective connection nodes Lg to the destination G are re-searched based on the predicted traffic information data indicating the traffic condition that will occur in the destination area Rg at that predicted arrival time Tg. Furthermore, routes (for example, two routes) in the start area Rs from the current position S to respective connection nodes Ls are re-searched for based on the traffic information data indicating the current traffic condition in the start area Rs. The time needed to reach the destination G is calculated for each combination of a route re-searched in the start area Rs, a route from the connection node Hs to the connection node Hg, and a route re-searched in the destination area Rg. Accordingly a combination of routes, that takes into account traffic information and that needs a shortest total driving time is selected as a route to be used in actual navigation.

That is, searching for routes in areas near the start point S and the destination G is performed elaborately (e.g., accurately accounting for traffic), but searching in the other areas is, performed roughly. Thus, in the determination of the navigation route that needs the shortest driving time, the computational complexity of the route searching process is reduced. Note that the route searching in the destination area Rg is performed elaborately using the predicted traffic information data indicating the predicted traffic condition that will occur in the destination area Rg at the predicted arrival time Tg, thereby obtaining a highly reliable result in the route searching.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

For example, the number of routes selected in the searching process in step 230 is not limited to two, any other number of routes may be selected.

The layers of the map data described in the hierarchical form are not limited to the two layers consisting of the upper layer H and the lower layer L. The map data may include three or more hierarchical layers. When the map data includes more than two layers, it should be appreciated that each region in a hierarchical layer above the lowest layer will include a plurality of the regions in each of the layers below that layer.

In the calculation of the predicted arrival time Tg or the driving time T₁ in step 270 or step 510, current traffic information data received by the communication unit 50 may be used for the period with the particular length of time after leaving the current position S. If driving will be started at a point in the future, the driving time in an area near the start position S may also be calculated based on predicted traffic information data indicating a predicted traffic condition that will occur at the future start time. This makes it possible to determine a navigation route that needs a shortest driving time and the precise value of the driving time even for future driving.

In step 210, the current position S detected by the current position detector 10 may be employed as the start point. Alternatively, the start point of the vehicle may be specified via the input unit 20.

The predicted traffic information data and the map data may not be stored in the memory 40, but may be stored elsewhere, for example, in the dedicated information and communication system C.

A method and an apparatus for searching for a navigation route search a tentative route from a start point to a destination, based on hierarchical map data, have been described above. The methods and apparatus search for a start-area route from the start point to a point on the tentative route at which wide-area map data is connected to local-area map data, based on the local-area map data and traffic information and search for a destination-area route to the destination from a point on the tentative route at which the wide-area map data is connected to the local-area map data, based on the local-area map data and the traffic information. The methods and apparatus determine a navigation route from the start point to the destination, based on the start-area route, the tentative route, and the destination-area route.

## Claims

1. A route search apparatus comprising:
a memory **(40)** that stores hierarchical map data and predicted traffic information, the hierarchical map data comprising at least wide-area map data **(H)** and local-area map data **(L);** and
a controller **(30)** that is adapted to:
receive current traffic information from outside the route search apparatus;
search a tentative route from a start point to a destination, based on the hierarchical map data;
search for a start-area route from the start point to a point on the tentative route at which the wide-area map data is connected to the local-area map data, based on the local-area map data and the current traffic information;
search for a destination-area route to the destination from a point on the tentative route at which the wide-area map data is connected to the local-area map data, based on the local-area map data and the predicted traffic information; and
determines a navigation route from the start point to the destination, based on the start-area route, the tentative route, and the destination-area route.

2. The apparatus of claim 1, wherein the controller receives the current traffic information from a dedicated information and communication system.

3. The apparatus of claim 1, wherein the controller **(30)** is adapted to search for the destination-area route based on a predicted traffic condition that will occur at a predicted arrival time at which the destination will be reached.

4. The apparatus of claim 3, wherein the predicted arrival time is estimated based on the tentative route.

5. The apparatus of claim 1, wherein the controller **(30)** is adapted to determine the navigation route based on predicted traffic information.

6. The apparatus of claim 1, wherein the controller **(30)** is adapted to determine the navigation route based on a portion of the tentative route in the wide-area data.

7. A route search apparatus comprising:
a memory **(40)** that stores hierarchical map data and predicted traffic information, the hierarchical map data comprising at least wide-area map data **(H)** and local-area map data **(L);** and
a controller **(30)** that is adapted to:
search a tentative route from a start point to a destination, based on the hierarchical map data;
search for a start-area route from the start point to a point on the tentative route at which the wide-area map data is connected to the local-area map data, based on the local-area map data and the predicted traffic information;
search for a destination-area route to the destination from a point on the tentative route at which the wide-area map data is connected to the local-area map data, based on the local-area map data and the predicted traffic information data; and
determine a navigation route from the start point to the destination, based on the start-area route, the tentative route, and the destination-area route.

8. The apparatus of claim 1, wherein the controller **(30)** is adapted to search for the destination-area route based on a predicted traffic condition that will occur at a predicted arrival time at which the destination will be reached.

9. The apparatus of claim 3, wherein the predicted arrival time is estimated based on the tentative route.

10. The apparatus of claim 1, wherein the controller **(30)** is adapted to determine the navigation route based on predicted traffic information.

11. The apparatus of claim 1, wherein the controller **(30)** is adapted to determine the navigation route based on a portion of the tentative route in the wide-area data.

12. A route search method comprising the steps of:
searching a tentative route from a start point to a destination, based on hierarchical map data, the hierarchical map data comprising at least wide-area map data and local-area map data;
searching for a start-area route from the start point to a point on the tentative route at which the wide-area map data is connected to the local-area map data, based on the local-area map data and current traffic information;
searching for a destination-area route to the destination from a point on the tentative route at which the wide-area map data is connected to the local-area map data, based on the local-area map data and predicted traffic information; and
determining a navigation route from the start point to the destination, based on the start-area route, the tentative route, and the destination-area route.

13. The method of claim 12, wherein searching for the destination-area route comprises searching for the destination-area route based on a predicted traffic condition that will occur at a predicted arrival time at which the destination will be reached.

14. The method of claim 13, further comprising estimating the predicted arrival time based on the tentative route.

15. The method of claim 12, wherein determining the navigation route comprises determining the navigation route based on the predicted traffic information.

16. The method of claim 12, wherein determining the navigation route comprises determining the navigation route based on a portion of the tentative route in the wide-area data.

17. A route search method comprising the steps of:
searching a tentative route from a start point to a destination, based on hierarchical map data, the hierarchical map data comprising at least wide-area map data and local-area map data;
searching for a start-area route from the start point to a point on the tentative route at which the wide-area map data is connected to the local-area map data, based on the local-area map data and predicted traffic information;
searching for a destination-area route to the destination from a point on the tentative route at which the wide-area map data is connected to the local-area map data, based on the local-area map data and the predicted traffic information; and
determining a navigation route from the start point to the destination, based on the start-area route, the tentative route, and the destination-area route.

18. The method of claim 17, wherein searching for the destination-area route comprises searching for the destination-area route based on a predicted traffic condition that will occur at a predicted arrival time at which the destination will be reached.

19. The method of claim 18, further comprising estimating the predicted arrival time based on the tentative route.

20. The method of claim 17, wherein determining the navigation route comprises determining the navigation route based on the predicted traffic information.

21. The method of claim 17, wherein determining the navigation route comprises determining the navigation route based on a portion of the tentative route in the wide-area data.
